# EUROPEAN PATENT APPLICATION

(11) **EP 4 648 139 A1**
(43) Date of publication of application: **12.11.2025**
(21) Application number: 24872908.9
(22) Date of filing: 25.09.2024
(51) Int. Cl.: H01M 4/62, H01M 10/052

(54) **CONDUCTIVE MATERIAL DISPERSION, ELECTRODE, AND LITHIUM SECONDARY BATTERY**

(30) Priority: 25.09.2023 KR 20230128613
(71) Applicant: LG Energy Solution, Ltd., Seoul 07335 (KR)
(72) Inventor: KO, Min Jin, Daejeon 34122 (KR); YANG, Hyun Jin, Daejeon 34122 (KR); KWON, Yo Han, Daejeon 34122 (KR); LEE, Jae Wook, Daejeon 34122 (KR)
(74) Representative: Hoffmann Eitle
(86) International application number: PCT/KR2024/014492
(87) International publication number: WO 2025/071200

(57) **Abstract**

The present invention relates to: a conductive material dispersion comprising single-walled carbon nanotube (SWCNT) clusters, wherein the number average length of the SWCNT clusters is 0.8 *µ*m to 8.0 *µ*m, the number of the SWCNT clusters having a length exceeding 10 *µ*m is no more than 15% of the total number of SWCNT clusters, the number average diameter of the SWCNT clusters is 5 nm to 30 nm, the number of the SWCNT clusters having a diameter exceeding 30 nm is no more than 15% of the total number of the SWCNT clusters, and the length and diameter of the SWCNT clusters are measured using atomic force microscopy (AFM); and an electrode comprising the SWCNT clusters. The present invention has the advantages of forming a conductive network well due to having excellent dispersibility, and thus being able to achieve excellent conductivity even in small amounts, having excellent processability due to the low viscosity of the dispersion, and being able to contribute to improved battery performance when the conductive material dispersion is applied to the electrode.

## Description

### TECHNICAL FIELD

The present invention relates to a conductive material dispersion liquid including a SWCNT cluster having limited length and diameter characteristics, and an electrode and a lithium secondary battery to which the dispersion liquid is applied.

### BACKGROUND ART

Due to rapid increase in using fossil fuel, demand for use of alternative energy or clean energy is increasing, and as part of this, the most actively conducted research area is the field of power generation and storage using electrochemical reactions.

Currently, a representative example of an electrochemical element using the electrochemical energy may be a secondary battery, and increasingly, the area of use is expanding. Recently, as technological development and demand for a portable device, such as a portable computer, a mobile phone, and a camera, are increasing, demand for the secondary battery as a power source is rapidly increasing, and among the secondary batteries, many researches on a lithium secondary battery having high energy density, that is, having high capacity, have been conducted, and the lithium secondary battery has also been commercialized and widely used.

An electrode of the secondary battery includes an electrode active material, a conductive material, and a binder. For the improvement in conductivity of the electrode, a carbon nanotube may be used as the conductive material, and particularly, in case of applying the one with a large specific surface area, effect on improving the conductivity is excellent even with small amounts.

In case of using a single-walled carbon nanotube (SWCNT) as the carbon nanotube, resistance of the electrode may be further lowered, and since the specific surface area is relatively large, there is an effect of easily securing the conductivity even with the small amounts. In order for the single-walled carbon nanotube to be evenly distributed in the electrode, a conductive material dispersion liquid, in which the single-walled carbon nanotubes are dispersed, is formed in advance, and then an electrode slurry is prepared using the conductive material dispersion liquid in preparation of the electrode.

However, the single-walled carbon nanotube has a problem in that improvement of battery performance varies significantly according to the dispersibility and intrinsic property, and also has a problem in that the expected dispersibility, based on the values measured from the conductive material dispersion liquid, is not directly related to the distribution in the electrode, resulting in discrepancies in evaluation.

Accordingly, to apply the single-walled carbon nanotube as a conductive material of an electrode, research is needed on a conductive material dispersion liquid which has excellent characteristics in a state of the dispersion liquid, and whose characteristics may be reflected in the electrode, and therefore, the performance of electrode may be intuitively predicted through the evaluation on the dispersion liquid.

### DISCLOSURE OF THE INVENTION

### TECHNICAL PROBLEM

A task of the present invention is to provide a conductive material dispersion liquid, wherein a single-walled carbon nanotube (SWCNT) cluster, which is an aggregate of single-walled carbon nanotubes having a relatively small length and small diameter, is applied, and the proportion of SWCNT cluster having a large length and large diameter is minimized, and between the SWCNT clusters having the relatively small length and small diameter, the SWCNT cluster, characterized by having wide distributions of the number average length and the number average diameter, is applied, and therefore, dispersibility is excellent, viscosity is low, and processibility is also excellent.

Another task of the present invention is to provide an electrode having excellent resistance characteristics due to a well-created conductive network when the conductive material dispersion liquid is applied to the electrode.

Another task of the present invention is to provide a lithium secondary battery including the electrode having excellent conductivity and maintenance performance, and thus having low resistance, excellent output, and improved lifetime.

### TECHNICAL SOLUTION

[1] An embodiment of the present invention provides a conductive material dispersion liquid including a single-walled carbon nanotube (SWCNT) cluster, wherein the SWCNT cluster has a number average length of 0.8 µm to 8.0 µm, and the SWCNT cluster having a length greater than 10 µm accounts for 15% or less of the total number, the SWCNT cluster has a number average diameter of 5 nm to 25 nm, and the SWCNT cluster having a diameter greater than 30 nm accounts for 15% or less of the total number, and the length and the diameter of the SWCNT cluster are measured using an atomic force microscopy (AFM).
[2] In [1] above, the SWCNT cluster may have a number average length of 1.0 µm to 6.0 µm.
[3] In [1] and/or [2] above, in the SWCNT cluster, the single-walled carbon nanotubes having a number average length greater than 10 µm may account for 10% or less of the total number.
[4] In at least one among [1] to [3] above, the SWCNT cluster may have a number average diameter of 7 nm to 20 nm.
[5] In at least one among [1] to [4] above, the SWCNT cluster having a diameter greater than 30 nm may account for 10% or less of the total number.
[6] In at least one among [1] to [5] above, the conductive material dispersion liquid further includes a dispersant, and the dispersant may include one or more selected from the group consisting of polyacrylate, polyvinylidene fluoride (PVDF), polyvinylpyrrolidone (PVP), polyvinylalchol, polyacrylamide, polyethyleneoxide, carboxymethyl cellulose (CMC), and diisopropylamine (DIPA).
[7] in [6] above, the SWCNT cluster may be included in an amount of 0.2 parts by weight to 3.5 parts by weight, and the dispersant may be included in an amount of 0.2 parts by weight to 7.0 parts by weight on the basis of 100 parts by weight of the conductive material dispersion liquid.
[8] Another embodiment of the present invention provides an electrode including an electrode active material layer, which contains an electrode active material, a single-walled carbon nanotube (SWCNT) cluster, and a binder, being disposed on a current collector, wherein the SWCNT cluster has a number average length of 0.8 µm to 8.0 µm, and the SWCNT cluster having a length greater than 10 µm accounts for 15 % or less of the total number, the SWCNT cluster has a number average diameter of 5 nm to 30 nm, and the SWCNT cluster having a diameter greater than 30 nm accounts for 15% or less of the total number, and the length and the diameter of the SWCNT cluster are measured using an atomic force microscopy (AFM).
[9] In [8] above, the electrode active material may be a positive electrode active material, and the positive electrode active material may include one or more selected from the group consisting of lithium nickel-ternary oxide, lithium-rich manganese-based oxide, lithium iron-based phosphate, lithium nickel oxide, lithium cobalt oxide, and lithium manganese oxide.
[10] In [8] and/or [9] above, the electrode active material may be a negative electrode active material, and the negative electrode active material may include one or more selected from the group consisting of a carbon-based particle, a silicon-based particle, and a carbon-silicon-based composite particle.
[11] In at least one among [8] to [10] above, the electrode may further include a dotted conductive material, and the dotted conductive material may include carbon black.
[12] Another embodiment of the present invention provides a lithium secondary battery having a structure in which a positive electrode, a separator, and a negative electrode are stacked in sequence, and at least one of the positive electrode and the negative electrode is the electrode previously described.

### ADVANTAGEOUS EFFECTS

The conductive material dispersion liquid according to the present invention may include a SWCNT cluster having unique length and diameter characteristics, and may thus have excellent dispersibility and low viscosity, and due to small changes in viscosity over time, storage stability may be excellent, and accordingly, the processibility may be improved.

Accordingly, by applying the SWCNT cluster having the above-described characteristics to an electrode slurry, phase stability of the slurry may be achieved, and since the dispersibility is excellent, conductivity may be sufficiently secured even with the small amounts, so that the electrode having excellent resistance characteristics may be achieved. Also, by applying the electrode having excellent resistance characteristics, as described above, the output of a lithium secondary battery may be improved, and not only a conductive network is well created, but also the maintenance performance is excellent, thereby contributing to improvement in lifetime of the lithium secondary battery.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include", "provide", "have" or the like, when used in this specification, specify the presence of stated features, integers, steps, elements, or a combination thereof, but do not preclude the presence or addition of one or more other features, integers, steps, elements, or a combination thereof.

In this specification, cumulative volume average particle diameters (D₅₀ and D₉₀) may be defined as respective particle diameters corresponding to 50% and 90% of cumulative volume in a particle diameter distribution curve of a particle. The D₅₀ and D₉₀ may be measured using, for example, a laser diffraction method. Through the laser diffraction method, the particle diameter in a size in a submicron region to a size of several mm may be generally measured, and the results of high reproducibility and high decomposability may be obtained.

In this specification, the ratio of the number average length and the length greater than 10 µm and the ratio of the number average diameter and the diameter greater than 30 nm of carbon nanotubes may be derived from number cumulative length and diameter distributions obtained by calculation of the lengths and diameters of 400 or more carbon nanotubes through an image measured at 20 µm x 20 µm, 15 µm x 15, and/or 10 µm x 10 µm in an AC air topography mode (tapping mode) under conditions of 0.4 V set point and 1.5 Hz scan rate using an atomic force microscopy (AFM) (Asylum Research, Cypher ES AFM System) .

In this specification, a cluster may refer to a form of one aggregate in which a plurality of units is bonded to each other, and a single-walled carbon nanotube (SWCNT) cluster may refer to an aggregate or agglomerate in a fibrous form in which a plurality of SWCNT units is bonded to each other.

Hereinafter, the present invention will be described in detail.

In this specification, the conductive material dispersion liquid, the electrode, and the lithium secondary battery may each include one or more of technical characteristics and/or technical components to be described below, and the technical characteristics and/or technical components may have combinations in various types.

### Conductive Material Dispersion Liquid

A conductive material dispersion liquid according to an embodiment of the present invention includes a single-walled carbon nanotube (SWCNT) cluster, and the SWCNT cluster has a number average length of 0.8 µm to 8.0 µm, and the SWCNT cluster having a length greater than 10 µm accounts for 15% or less of the total number, and the SWCNT cluster has a number average diameter of 5 nm to 25 nm, and the SWCNT cluster having a diameter greater than 30 nm accounts for 15% or less of the total number, and the length and the diameter of the SWCNT cluster are measured using an atomic force microscopy (AFM).

### (1) Single-Walled Carbon Nanotube

A carbon nanotube has a graphite sheet having a cylindrical shape with a nano-sized diameter and having a sp2 binding structure, exhibiting characteristics of conductor or semiconductor depending on the angle at which the graphite sheet is rolled and the structure. According to the number of bindings forming walls, the carbon nanotube may be classified into a single-walled carbon nanotube (SWCNT), a double-walled carbon nanotube (DWCNT), and a multi-walled carbon nanotube (MWCNT).

According to an embodiment of the present invention, the conductive material dispersion liquid includes a SWCNT cluster which is an aggregate of single-walled carbon nanotubes (SWCNT). Since the single-walled carbon nanotube has a larger specific surface area than that of the multi-walled carbon nanotube, conductivity may be sufficiently secured even when the small amounts are added, and therefore, the amount of reduction in electrode resistance may be largely increased. However, in case of the single-walled carbon nanotube, excellent length characteristics are required in order to maximize the advantage of easy securing of the conductivity only with the small amounts. However, the length characteristics are not easy to measure accurately, and an expected level of improvement in conductivity is often not reflected as it is. In addition, despite the excellent length characteristics, if excessive, there is a problem that the viscosity of a dispersion liquid, and even the viscosity of a slurry, may be affected.

Accordingly, the present inventors are to provide a conductive material dispersion liquid including a SWCNT cluster having characteristics of the length and diameter being limited and unique, wherein excellent dispersibility may be secured without increased viscosity of the dispersion liquid and capability of forming a conductive path in an electrode may be intuitively predicted through the measured values.

The SWCNT cluster included in the conductive material dispersion liquid, according to an embodiment of the present invention, is characterized by having a number average length of 0.8 µm to 8.0 µm, and including the SWCNT cluster having a length greater than 10 µm less than 15% of the total number, and the ratio of the number average length of the SWCNT cluster and the number of SWCNT clusters having a length greater than 10 µm may be derived from a number distribution obtained by the measurement using the atomic force microscopy, previously described.

The SWCNT cluster, which has a number average length in an appropriate level satisfying the range of 0.8 µm to 8.0 µm, may be characterized by excluding inclusion of the SWCNT cluster having a large length greater than 10 µm, and in addition, the SWCNT cluster may be characterized in that, in the range satisfying the number average length, the created conductive network may be well maintained despite volume expansion of an electrode occurring in a process of charging and discharging cycle.

According to an embodiment of the present invention, the number average length of the SWCNT cluster may be 0.8 µm to 8.0 µm, preferably, 0.9 µm or greater, 1.0 µm or greater, 1.1 µm or greater, 1.2 µm or greater, 1.3 µm or greater, 1.4 µm or greater, or 1.5 µm or greater, and 7.8 µm or less, 7.5 µm or less, 7.0 µm or less, 6.5 µm or less, 6.0 µm or less, 5.5 µm or less, 5.0 µm or less, 4.5 µm or less, or 4.0 µm or less. When the number average length is less than 0.8 µm, the length may be too short to maintain a connecting path of the conductive network easily, due to volume change of an electrode caused by the charging and discharging. In addition, when the number average length is greater than 8.0 µm, the problems that the viscosity of dispersion liquid increases while the number of SWCNT clusters per unit weight decreases, and that distribution in the electrode becomes uneven, may be caused.

Also, according to an embodiment of the present invention, the SWCNT cluster may be characterized in that the SWCNT cluster having a length greater than 10 µm accounts for 15% or less of the total number, and preferably, 13% or less, 11% or less, 10% or less, or 9% or less. Once the proportion of the number of SWCNT clusters having a length greater than 10 µm is higher than 15%, the viscosity of the dispersion liquid may not be controlled, and even though dispersion conditions are controlled to make the dispersion uniform, there may be rapidly increasing possibility of the change in viscosity over time becoming more severe. In addition, the more the number of SWCNT clusters having a large length, the more difficult the uniform distribution in the electrode is to achieve, and since there is a high possibility that prediction for securing conductivity measured on the dispersion liquid is not intuitively reflected to the state of the electrode, the number of SWCNT clusters having a length greater than 10 µm needs to be controlled with precision.

The SWCNT cluster included in the conductive material dispersion liquid, according to an embodiment of the present invention, may be characterized in that the number average diameter is 7 nm to 20 nm, and the SWCNT cluster having a diameter greater than 30 nm accounts for 10% or less of the total number, and the ratio of the number average diameter of the SWCNT cluster and the number of SWCNT clusters having a diameter greater than 30 nm may be derived from the number distribution obtained through the atomic force microscopy measurement previously described.

The SWCNT cluster, which has a number average diameter in an appropriate level satisfying the range of 7 nm to 20 nm, may be characterized by excluding excessive inclusion of the SWCNT clusters having a large diameter greater than 30 nm, and in addition, the SWCNT cluster may be characterized in that, within the range satisfying the number average diameter, the created conductive network may be well maintained despite volume expansion of the electrode occurring in a charging and discharging cycle process.

According to an embodiment of the present invention, the number average diameter of the SWCNT cluster may be 7 nm to 20 nm, preferably, 8 nm or greater, 9 nm or greater, 10 nm or greater, 11 nm or greater, or 12 µm or greater, and 19 nm or less, 18 nm or less, 17 nm or less, 16 nm or less, or 15 nm or less. When the number average diameter is less than 7 nm, the diameter is too small, so that the SWCNT cluster may be easily damaged during charging and discharging, and a short circuit problem may occur due to volume expansion, etc., so that it may not be easy to maintain the conductive network connecting path. In addition, when the number average diameter is greater than 20 nm, the viscosity of dispersion liquid increases while the number of SWCNT clusters per unit weight decreases, and the problem of uneven distribution in the electrode, due to inappropriate dispersion, may be caused, which may act as an element that hinders the mobility of lithium ions when bonded to a surface of an active material.

According to an embodiment of the present invention, the SWCNT cluster may be characterized in that the SWCNT cluster having a length greater than 30 nm accounts for 10% or less of the total number, and preferably, 9% or less, 8% or less, or 7% or less. Once the proportion of the number of SWCNT clusters having a diameter greater than 30 nm is higher than 10%, the viscosity of dispersion liquid may not be controlled, and even though dispersion conditions are controlled to make the dispersion uniform, there may be rapidly increasing possibility of change in viscosity over time becoming more severe. In addition, the more the number of SWCNT clusters having a large diameter, the more difficult the uniform distribution in the electrode is to achieve, and due to high possibility of acting as an element that hinders the mobility of lithium ions as previously described, the number of SWCNT clusters having a diameter greater than 30 nm needs to be controlled with precision.

In general, in case of a conductive material dispersion liquid including carbon nanotubes, a cumulative volume average particle diameter (D₅₀ and/or D₉₀) of the dispersion liquid is often used in order to predict the forming of a conductive path in an electrode and uniform distribution, but a particle size distribution in this state of the dispersion liquid may not reflect the length and diameter of actual carbon nanotubes or an aggregate thereof, so that performance of the electrode may vary even in case of applying that of the same particle size distribution, but the length and diameter characteristics, obtained by the number cumulative length and diameter distributions through an atomic force microscopy image according to an embodiment of the present invention, may have substantially same dispersion state and the conductive network formation in the electrode, which may act more effectively and intuitively on improvement in performance of the electrode.

According to an embodiment of the present invention, the SWCNT cluster may be included in an amount of 0.2 parts by weight to 3.5 parts by weight, and particularly, may be included in an amount of 0.2 parts by weight to 3.0 parts by weight on the basis of 100 parts by weight of the conductive material dispersion liquid. When the amount falls within the above ranges, transfer and input of an electrode slurry is easy while high productivity is maintained. In addition, since the solid content of the electrode slurry to be prepared is not too low, occurrence of binder migration may be suppressed in drying of an electrode. Accordingly, adhesion of the electrode may be improved, and packing of an electrode active material layer may be effectively done, so that the electrode with a small thickness may be prepared.

### (2) Dispersant

The conductive material dispersion liquid according to an embodiment of the present invention may further include a dispersant, and the dispersant may include one or more selected from the group consisting of polyacrylate, polyvinylidene fluoride (PVDF), polyvinylpyrrolidone (PVP), polyvinylalchol, polyacrylamide, polyethylene oxide, a hydrogenated nitrile-based copolymer, a cellulose-based compound, and diisopropylamine (DIPA). Here, the hydrogenated nitrile-based copolymer may be a hydrogenated acrylonitrile-butadiene rubber, and the cellulose-based compound may be carboxymethyl cellulose (CMC) or hydroxyethyl cellulose (HEC).

In addition, the dispersant may be included in an amount of 0.2 parts by weight to 7.0 parts by weight, particularly 0.2 parts by weight to 6.0 parts by weight, and more particularly, 0.3 parts by weight to 5.0 parts by weight on the basis of 100 parts by weight of the conductive material dispersion liquid. When the amount falls within the above ranges, a carbon-based conductive material may be dispersed smoothly in the conductive material dispersion liquid, and the energy density of an electrode to be prepared may be improved, and the resistance may be reduced.

### (3) Solvent

According to an embodiment of the present invention, the conductive material dispersion liquid may further include a solvent, the solvent may include water or an organic solvent, and the organic solvent may include any one, or two or more hetero atoms selected from the group consisting of a nitrogen atom (N) and an oxygen atom (O) having an unshared electron pair.

In particular, the organic solvent may be an amide-based polar organic solvent including dimethyl formamide (DMF), diethyl formamide, dimethyl acetamide (DMAc), N-methyl pyrrolidone (NMP), etc.; alcohols including methanol, ethanol, 1-propanol, 2-propanol(isopropyl alcohol), 1-butanol(n-butanol), 2-methyl-1-propanol(isobutanol), 2-butanol(sec-butanol), 1-methyl-2-propanol(tert-butanol), pentanol, hexanol, heptanol, or octanol; glycols including ethylene glycol, diethylene glycol, triethylene glycol, propylene glycol, 1,3-propanediol, 1,3-butanediol, 1,5-pentanediol, or hexylene glycol; polyhydric alcohols including glycerin, trimethylolpropane, pentaerythritol, or sorbitol; glycol ethers including ethyleneglycolmono methylether, diethyleneglycolmono methylether, triethyleneglycol mono methylether, tetra ethyleneglycolmono methylether, ethyleneglycolmono ethylether, diethyleneglycolmono ethylether, triethyleneglycol mono ethylether, tetra ethyleneglycolmono ethylether, ethyleneglycolmono butyl ether, diethyleneglycolmono butyl ether, triethyleneglycol mono butylether, or tetra ethyleneglycolmono butyl ether, etc.; ketones including acetone, methyl ethyl ketone, methyl propyl ketone, or cyclopentanone; and esters including ethyl acetate, γ-butyrolactone, and ε-propiolactone, and any one thereof, or a mixture of two or more thereof may be used. Considering the compatibility with an electrode slurry, N-methyl pyrrolidone (NMP) is particularly preferred.

### (4) Others

According to an embodiment of the present invention, the solid content of the conductive material dispersion liquid may be included in an amount of 0.3 wt% to 7.0 wt%, particularly 0.4 wt% to 5.0 wt%, and more particularly 0.5 wt% to 3.5 wt% in the conductive material dispersion liquid. When the amount falls within the above ranges, the viscosity of the conductive material dispersion liquid may be maintained at a low level, and also, the conductive material dispersion liquid may be effectively dispersed. At this time, the solid content may refer to the SWCNT cluster and the dispersant included in the conductive material dispersion liquid.

The conductive material dispersion liquid of the present invention, including the above-described components, may be prepared by mixing the SWCNT cluster, the dispersant, and the solvent. At this time, the mixing may be performed in a general mixing method, particularly by using a mixing instrument such as a homogenizer, a beads mill, a ball mill, a basket mill, an attrition mill, a universal agitator, a clear mixer, a spike mill, or a TK mixer, and the order of mixing the components is not particularly limited. That is, the conductive material dispersion liquid according to the present invention may be formed by adding the single-walled carbon nanotubes (for example, in a state of a large bundle in micro unit) to a solvent, and then adding the dispersant and mixing, may also be formed by first adding the dispersant to the solvent and then mixing the single-walled carbon nanotube bundle, and may also be formed by adding the single-walled carbon nanotube bundle and the dispersant together to the solvent and then mixing.

Meanwhile, in the mixing process, a cavitation dispersion process may also be performed in order to increase dispersibility of the single-walled carbon nanotube bundle. The cavitation dispersion process is a method of dispersion processing using shock waves created by collapse of vacuum bubbles made in water when high energy is applied to liquid, and in this method, the single-walled carbon nanotubes may be dispersed, without compromising the characteristics thereof, in the SWCNT cluster. In particular, the cavitation dispersion processing may be performed by ultrasound waves, a jet mill, or a sheer dispersion processing.

According to an embodiment of the present invention, the conductive material dispersion liquid may further include a dotted conductive material. The conductive material that may be further included may have different characteristics from the characteristics of the SWCNT cluster previously described, and it may be preferable that the shape characteristics are different from each other. In a case where a conductive material having similar shape characteristics, for example, a linear conductive material such as multi-walled carbon nanotubes or carbon nanofiber, is included, formation of a conductive network by the characteristics of the SWCNT cluster, previously described, may be affected.

For example, the dotted conductive material may include carbon black, and the carbon black may include one or more selected from the group consisting of acetylene black, kejten black, channel black, furnace black, lamp black, and thermal black.

### Electrode

Another embodiment of the present invention provides an electrode in which an electrode active material layer including an electrode active material, a single-walled carbon nanotube (SWCNT) cluster, and a binder is disposed on a current collector, the SWCNT cluster has a number average length of 0.8 µm to 8.0 µm, and the SWCNT cluster having a length greater than 10 µm accounts for 15% or less of the total number, the SWCNT cluster has a number average diameter of 5 nm to 30 nm, and the SWCNT cluster having a diameter greater than 30 nm accounts for 15% or less of the total number, and the length and the diameter of the SWCNT cluster are measured using an atomic force microscopy (AFM).

At this time, the SWCNT cluster is a SWCNT cluster included in the conductive material dispersion liquid according to the present invention, previously described, and as the content thereof is the same as what is described above, detailed description will be omitted, and the other components will be described hereinafter.

According to an embodiment of the present invention, the electrode active material may be a positive electrode active material, the electrode may be a positive electrode, and the positive electrode may include a positive electrode current collector, and a positive electrode active material layer formed on the positive electrode current collector and containing the positive electrode active material.

In the positive electrode, the positive electrode current collector is not particularly limited as long as it does not cause chemical change in the relevant battery and has conductivity. For example, for the positive electrode current collector, stainless steel, aluminum, nickel, titanium, calcined carbon, or aluminum or stainless steel that is surface-treated with carbon, nickel, titanium, silver, etc. may be used.

The positive electrode current collector may generally have a thickness of 3 µm to 500 µm, and may preferably have a thickness of 300 µm or less, 200 µm or less, 100 µm or less, or 80 µm or less. The current collector may also have microscopic irregularities on a surface thereof to strengthen binding force with the positive electrode active material. For example, the current collector may be used in various forms including a film, a sheet, a foil, a net, a porous body, a foam body, a non-woven fiber body, etc.

The positive electrode active material may be a positive electrode active material that is generally used. In particular, the positive electrode active material may include a layered compound including lithium cobalt oxide (LiCoO₂) lithium nickel oxide (LiNiO₂), etc., or a compound substituted with one or more transition metal; lithium iron oxide such as LiFe₃O₄; lithium manganese oxide represented by chemical formulas such as Li_{1+c1}Mn_{2-c1}O₄ (0≤c1≤0.33), LiMnO₃, LiMn₂O₃, and LiMnO₂; lithium copper oxide (Li₂CuO₂); a vanadium oxide including LiV₃O₈, V₂O₅, Cu₂V₂O₇, etc.; Ni-rich layered lithium nickel oxide or lithium nickel-ternary oxide represented by chemical formula LiNi_{1-c2}M_{c2}O₂ (where, M is at least one selected from the group consisting of Co, Mn, Al, Cu, Fe, Mg, B, and Ga, and 0.01≤c2≤0.3 is satisfied.); a lithium manganese composite oxide represented by chemical formula LiMn_{2-c3}M_{c3}O₂ (where, M is at least one selected from the group consisting of Co, Ni, Fe, Cr, Zn, and Ta, and 0.01≤c3≤0.1 is satisfied.) or Li₂Mn₃MO₈ (where, M is at least one selected from the group consisting of Fe, Co, Ni, Cu, and Zn.); and LiMn₂O₄ where some Li are substituted with alkaline earth metal ions, but an embodiment of the present invention is not limited thereto. The positive electrode may also be a Li-metal.

Preferably, the positive electrode active material may include one or more selected from the group consisting of lithium nickel-ternary oxide, lithium-rich manganese-based oxide, lithium iron-based phosphate, lithium nickel oxide, lithium cobalt oxide, and lithium manganese oxide.

The positive electrode active material layer may include a positive electrode conductive material and a positive electrode binder, together with the positive electrode active material, previously described.

At this time, as the positive electrode conductive material, the conductive material dispersion liquid, previously described, may be applied, and other than the conductive material dispersion liquid, any conductive material that provides conductivity to an electrode may be further included, and may be used without particular limitation as long as it does not cause chemical change in a battery and conducts electrons.

Specific examples may be graphite such as natural graphite or artificial graphite; carbon black including acetylene black, ketjen black, channel black, furnace black, lamp black, thermal black, etc.; a fibrous carbon material including a carbon nanotube, a carbon nanofiber, a carbon fiber, etc.; a powder or fiber of metal including copper, nickel, aluminum, silver, etc.; a conductive whisker including zinc oxide, potassium titanate, etc.; a conductive metal oxide such as titanium oxide; or a conductive polymer such as a polyphenylene derivative, and any one alone or a mixture of two or more thereof may be used.

In addition, the positive electrode binder may serve to improve binding between the positive electrode active material particles and adhesion between the positive electrode active material and the positive electrode current collector. Specific examples may include polyvinylidene fluoride (PVDF), a vinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), fluorine rubber, or various copolymers thereof, and any one alone or a mixture of two or more thereof may be used.

According to an embodiment of the present invention, the electrode active material may be a negative electrode active material, the electrode may be a negative electrode, and the negative electrode may include a negative electrode current collector, and a negative electrode active material layer formed on the negative electrode current collector and containing the negative electrode active material.

The negative electrode current collector is not particularly limited as long as it does not cause chemical changes to a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used.

The negative electrode current collector may generally have a thickness of 3 µm to 500 µm, and may preferably have a thickness of 300 µm or less, 200 µm or less, 100 µm or less, or 80 µm or less. The current collector may also have microscopic irregularities on a surface thereof to strengthen binding force with the negative electrode active material. For example, the negative electrode current collector may be used in various forms including a film, a sheet, a foil, a net, a porous body, a foam body, a non-woven fiber body, etc.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a (semi) metal-based compound capable of alloying with lithium including Si, Al, Sn, Pb, Zn, Bi, In, Mg, Ga, Cd, Si alloy, Sn alloy, or Al alloy; a (semi)metal oxide capable of doping or dedoping lithium such as SiOv(0<v≤2), SnO₂, vanadium oxide, and lithium vanadium oxide; or a composite containing the metal-based compound and the carbon-based material such as a Si-C composite or a Sn-C composite, and any one thereof or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include non-shaped, plate-shaped, flake-shaped, sphere-shaped, or fibrous natural graphite or artificial graphite, kish graphite, pyrolytic carbon, mesophase pitch based carbon fiber, meso-carbon microbeads, mesophase pitches, high-temperature calcined carbon such as petroleum or coal tar pitch derived cokes, and the like.

For example, the negative electrode active material may include one or more selected from the group consisting of a carbon-based particle, a silicon-based particle, and a carbon-silicon-based composite particle. In addition, the negative electrode active material may preferably include a silicon-based active material, and for example, a Si particle, SiOv(0<v≤2), or a Si-C composite.

The negative electrode active material may be included in an amount of 70 wt% to 99 wt%, in an amount of 75 wt% or greater, 80 wt% or greater, 85 wt% or greater, 90 wt% or greater, or 95 wt% or greater, and also, in an amount of 99.0 wt% or less, 98.5 wt% or less, 98.0 wt% or less, 97.5 wt% or less on the basis of the total solid content in a negative electrode slurry. When the amount of the negative electrode active material falls within the above ranges, excellent energy density, electrode adhesion, and electrical conductivity may be achieved.

The binder serves to secure binding force between the electrode active materials or between the electrode active material and the current collector, and binders generally used in the relevant art may be used, and the type is not particularly limited. Examples of the binder may include polyvinylidene fluoride (PVDF), a vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), fluorine rubber, or various copolymers thereof, and any one alone or a mixture of two or more thereof may be used.

The binder may be included in an amount of 10.0 wt% or less, preferably in an amount of 0.5 wt% or greater, 1.0 wt% or greater, 1.5 wt% or greater, or 2.0 wt% or greater, and also, in an amount of 9.0 wt% or less, 8.0 wt% or less, 7.0 wt% or less, 5.0 wt% or less on the basis of the total solid content in a negative electrode slurry. When the content of the binder falls within the above ranges, excellent electrode adhesion may be achieved while minimizing the increase of electrode resistance.

At this time, as the negative electrode conductive material, the conductive material dispersion liquid, previously described, may be applied, and other than the conductive material dispersion liquid, any conductive material that provides conductivity to an electrode may be further included, and may be used without particular limitation as long as it does not cause chemical change in a battery and conducts electrons.

Specific examples may be graphite such as natural graphite or artificial graphite; carbon black including acetylene black, ketjen black, channel black, furnace black, lamp black, thermal black, etc.; a fibrous carbon material including a carbon nanotube, a carbon nanofiber, a carbon fiber, etc.; a powder or fiber of metal including copper, nickel, aluminum, silver, etc.; a conductive whisker including zinc oxide, potassium titanate, etc.; a conductive metal oxide such as titanium oxide; or a conductive polymer such as a polyphenylene derivative, and any one alone or a mixture of two or more thereof may be used.

Meanwhile, the electrode active material layer may be formed by applying the electrode slurry, where the electrode active material, the binder, and the conductive material dispersion liquid including the SWCNT cluster are dispersed in a solvent, on the current collector, and then drying and performing a rolling process.

In particular, the electrode active material layer may be formed in a method where the electrode slurry is applied onto the electrode current collector and then dried, or in a method where the electrode slurry is applied onto a separate supporting body, and then a film separated from the supporting body is laminated onto the electrode current collector. If needed, a rolling process may further be performed after the electrode active material layer is formed through the above-described methods. At this time, the drying and rolling may be performed in appropriate conditions in consideration of property of the electrode to be finally prepared, and not particularly limited.

The electrode slurry may further include a solvent, as needed, for adjusting the viscosity, etc. At this time, the solvent may be water, an organic solvent, or a mixture thereof. The organic solvent may be, for example, an amide-based polar organic solvent including dimethyl formamide (DMF), diethyl formamide, dimethyl acetamide (DMAc), N-methyl pyrrolidone (NMP), etc.; alcohols including methanol, ethanol, 1-propanol, 2-propanol(isopropyl alcohol), 1-butanol(n-butanol), 2-methyl-1-propanol(isobutanol), 2-butanol(sec-butanol), 1-methyl-2-propanol(tert-butanol), pentanol, hexanol, heptanol, or octanol; glycols including ethylene glycol, diethylene glycol, triethylene glycol, propylene glycol, 1,3-propanediol, 1,3-butanediol, 1,5-pentanediol, or hexylene glycol; polyhydric alcohols including glycerin, trimethylolpropane, pentaerythritol, or sorbitol; glycol ethers including ethyleneglycolmono methylether, diethyleneglycolmono methylether, triethyleneglycol mono methylether, tetra ethyleneglycolmono methylether, ethyleneglycolmono ethylether, diethyleneglycolmono ethylether, triethyleneglycol mono ethylether, tetra ethyleneglycol mono ethylether, ethyleneglycolmono butyl ether, diethyleneglycolmono butyl ether, triethyleneglycol mono butyl ether, or tetra ethyleneglycolmono butyl ether, etc.; ketones including acetone, methyl ethyl ketone, methylpropyl ketone, or cyclopentanone; and esters including ethyl acetate, γ-butyrolactone, and ε-propiolactone, and any one thereof or a mixture of two or more thereof may be used, but an embodiment of the present invention is not limited thereto.

The solvent may be included in an amount that allows the electrode slurry to have a solid content of 40 wt% to 85 wt%, and preferably 50 wt% to 80 wt%. When the amount falls within the above ranges, binder migration may be suppressed, so that the electrode adhesion may be improved, and the temperature for drying may be lowered, so that the coating quality may be improved, and the coating speed may be increased, thereby improving the productivity.

### Lithium Secondary Battery

A lithium secondary battery according to another embodiment of the present invention has a structure of a positive electrode, a separator, and a negative electrode stacked in sequence, and at least one among the positive electrode and the negative electrode is the electrode previously described. In particular, the lithium secondary battery according to the present invention may include a positive electrode, a negative electrode, and a separator disposed between the positive electrode and the negative electrode, and an electrolyte, and at this time, the positive electrode and the negative electrode are same as previously described.

Hereinafter, the other components will only be described.

According to an embodiment of the present invention, the separator separates the negative electrode and the positive electrode and provides a movement path of lithium ions, and any separator may be used, without particular limitation, as long as it is used as a separator in a general secondary battery. In particular, as the separator, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

According to an embodiment of the present invention, the electrolyte may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of the lithium secondary battery, and the type is not limited thereto.

In particular, the electrolyte may include a non-aqueous organic solvent and a lithium salt.

As the non-aqueous organic solvent, an aprotic organic solvent, for example, N-methyl-2-pyrrolidone, propylene carbonate, ethylene carbonate, butylene carbonate, dimethyl carbonate, diethyl carbonate, gamma-butyrolactone, 1,2 dimethoxy ethane, tetrahydroxyfuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid tri ester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, etc., may be used.

In particular, among the carbonate-based organic solvents, ethylene carbonate and propylene carbonate that are cyclic carbonates have high viscosity, and high dielectric constant, and dissociates a lithium salt well, and may thus be preferably used, and if low-viscosity low-dielectric constant linear carbonate, such as dimethyl carbonate and diethyl carbonate, is mixed in the cyclic carbonate in an appropriate ratio, it may be possible to provide an electrolyte having high electrical conductivity, which may be more preferably used.

A lithium salt may be used as the metal salt, and the lithium salt may be a material that is good to be dissolved in the non-aqueous electrolyte solution, and for example, negative ions of the lithium salt may include one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)2CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ .

In addition to the electrolyte components, at least one additive, for example, a halo-alkylene carbonate-based compound such as difluoro ethylene carbonate, pyridine, triethyl phosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in order to improve lifetime characteristics of the battery, suppress the reduction in battery capacity, and improve discharge capacity of the battery.

### Examples

Hereinafter, examples of the present invention will be described in detail so that those skilled in the art may easily carry out the present invention. However, the present invention may be implemented in several different forms, and is not limited to the examples to be described herein.

### Examples 1a to 4a and Comparative Examples 1a to 9a: Conductive Material Dispersion Liquid

1 part by weight of a single-walled carbon nanotube bundle, 1 part by weight of polyvinylpyrrolidone (PVP, K15, Zhangzhou Huafu) as a dispersant, 200 parts by weight of N-methyl pyrrolidone were mixed, and first mixing was then performed for 180 minutes using a mixer (BTM-50, disper 1000 rpm/anchor 100 rpm). A high-pressure homogenizer (NG-20K of Genizer) was used for the mixed mixture to obtain a conductive material dispersion liquid by varying the number of circulations, second mixing was performed on the obtained conductive material dispersion liquid in different mixing ratios (weight ratios) as shown in Table 1 below, and therefore, each dispersion liquid containing a SWCNT cluster with a solid content of 1 wt% was obtained.

**[Table 1]**

| | Pressure index* | 10 pass circulation dispersion liquid | 5 pass circulation dispersion liquid | 2 pass circulation dispersion liquid |
|---|---|---|---|---|
| Example 1a | 100 | 7 | 3 | - |
| Example 2a | 100 | 6 | 4 | - |
| Example 3a | 100 | 6.5 | 3 | 0.5 |
| Example 4a | 130 | - | 5 | 5 |
| Comparative Example 1a | 170 | 7 | 3 | - |
| Comparative Example 2a | 170 | 8 | - | 2 |
| Comparative Example 3a | 100 | - | 2 | 8 |
| Comparative Example 4a | 130 | - | 3 | 7 |
| Comparative Example 5a | 100 | 4 | 4 | 2 |
| Comparative Example 6a | 100 | 2 | 2 | 6 |
| Comparative Example 7a | 100 | 1 | 2 | 7 |
| Comparative Example 8a | 100 | 1 | 1 | 8 |
| Comparative Example 9a | 170 | 9 | 1 | - |

| | | | | |
|---|---|---|---|---|
| * A relative value based on the pressure applied to each, when the pressure of Example 1 is 100. | | | | |

### Experimental Example 1: Measurement of Length and Particle Size

The conductive material dispersion liquids according to the examples and comparative examples were diluted in water, then 50 µl of the diluted solution was dropped on a surface of freshly cleaved mica, and then vacuum-dried to prepare a sample. The prepared sample was photographed using an atomic force microscopy (Asylum Research, Cypher ES AFM System) in the following conditions.
- Measuring mode: AC air topography mode (tapping mode)
- Measuring condition: 0.4 V set point and 1.5 Hz scan rate
- Measured image size: measured at 20 µm x 20 µm, 15 µm x 15, and 10 µm x 10 µm magnification
- Probe: AC160TS (n-type doped Si, reflective Al coating, *f*₀ 300 kHz, *k* 26 N/m)

Through an AFM image obtained by measuring in the above conditions, the lengths and diameters of at least 100 SWCNT clusters were measured (using an image processing program) to obtain a length distribution, then the number average length and diameter, the ratio of the number of SWCNT clusters having a length great than 10 µm, and the ratio of the number of SWCNT clusters having a diameter greater than 30 nm were derived therefrom.

To measure the average particle diameters D₅₀ (µm) and D₉₀ (µm) in a cumulative volume, the conductive material dispersion liquid was introduced into a laser diffraction particle size measurement instrument (Mastersizer2000 of Malvern), irradiated with ultrasounds of about 28 kHz at an output of 60 W, then a cumulative volume particle size distribution graph was obtained, and then the particle size corresponding to 50% in the cumulative volume was calculated therefrom.

**[Table 2]**

| | Number Avg length (µm) | Number ratio of Length greater than 10 µm | Number Avg diameter (nm) | Number ratio of diameter greater than 30 nm | D50 (µm) | D90 (µm) |
|---|---|---|---|---|---|---|
| Example 1a | 1.54 | 1.0 | 9 | 3 | 3.6 | 12.1 |
| Example 2a | 1.72 | 1.5 | 10 | 4 | 3.5 | 15.8 |
| Example 3a | 2.30 | 3.9 | 17 | 6 | 3.8 | 20.1 |
| Example 4a | 4.20 | 7.8 | 21 | 9 | 3.8 | 28.1 |
| Comparative Example 1a | 0.68 | 0 | 4 | 3 | 3.4 | 15.8 |
| Comparative Example 2a | 0.71 | 0.2 | 6 | 5 | 3.5 | 15.5 |
| Comparative Example 3a | 7.10 | 22.0 | 38 | 21 | 28.0 | 92.0 |
| Comparative Example 4a | 3.00 | 7.0 | 32 | 10 | 3.9 | 25.0 |
| Comparative Example 5a | 2.00 | 6.0 | 20 | 15 | 3.1 | 23.0 |
| Comparative Example 6a | 3.00 | 7.0 | 29 | 13 | 3.9 | 28.0 |
| Comparative Example 7a | 9.00 | 8.0 | 25 | 10 | 8.0 | 43.0 |
| Comparative Example 8a | 2.00 | 30.0 | 25 | 10 | 23.0 | 85.0 |
| Comparative Example 9a | 0.60 | 5.0 | 3 | 3 | 3.5 | 19.0 |

Referring to Table 2 above, it can be seen that, even though the average particle diameters D₅₀ and D₉₀ in the cumulative volume had similar values on the dispersion liquid, the lengths of SWCNT clusters substantially included in the electrode were different.

### Examples 1b to 4b and Comparative Examples 1b to 9b

A pure Si particle having an average particle diameter (D₅₀) of 5 µm as a negative electrode active material, a particle-type conductive material (SFG6L), the conductive material dispersion liquid (on the basis of the solid content weight) prepared according to each of Examples 1a to 4a and Comparative Examples 1a to 9a above, and an aqueous binder were mixed in a weight ratio of 80:9.6:0.8:9.6, and water was used as a solvent to prepare a negative electrode slurry with a solid content of 30%. Here, the aqueous binder is a polymer in which acrylamide, acrylic acid, and acrylonitrile were used in a weight ratio of 60:30:10 and polymerized (ammonium persulfate polymerization initiator, at 75 °C, and 8-hour polymerization reaction).

The negative electrode slurry was applied onto one side of a copper foil having a thickness of 18 µm such that the thickness of the active material layer became 50 µm, and then dried to prepare a negative electrode.

### Experimental Example 2: Evaluation on Coating Processibility and Lifetime Characteristics

A porous polyethylene separator was disposed between the negative electrode according to each of Examples 1b to 4b and Comparative Examples 1b to 9b above and the positive electrode to prepare an electrode assembly, and the electrode assembly was positioned inside a case, and then an electrolyte solution was injected thereto to prepare a lithium secondary battery.

At this time, LiPF₆ with a concentration of 1 M was dissolved in an organic solvent including ethylene carbonate/ethylmethyl carbonate/diethyl carbonate in a volume ratio of 3:4:4 to prepare the electrolyte solution, and the positive electrode was prepared as follows.

LiNi_{0.6}Co_{0.1}Mn_{0.3}O₂, polyvinylidene fluoride, and carbon black were added in a weight ratio of 95:3:2, and N-methylpyrrolidone (NMP) was further added to prepare a positive electrode slurry having a solid content of 70.1 wt%, then the positive electrode slurry was applied onto an Al thin film current collector having a thickness of 20 µm, and then dried at 130 °c and pressed to prepare the positive electrode.

The lithium secondary battery was charged with a Crate of 0.1 C at 4.2 V, and then discharged until 2.5 V to perform a formation process.

After each of the lithium secondary batteries was charged in a CCCV mode with 0.2 C to 4.25 V (1/20 C cut-off), 100 cycles of charging and discharging were performed on each of the lithium secondary batteries, when charging with 0.33 C constant current to 4.25 V at 45 °C and then discharging with 0.33 C constant current to 2.5 V were referred to as 1 cycle, and the charge and discharge capacities were measured, and the capacity retention rate was calculated as below. Capacity retention rate (%) = (discharge capacity after 100 cycles)/ (discharge capacity after 1 cycle) x 100.

When the negative electrode slurry was applied onto a copper foil, whether stains occur on the electrode surface, whether pinholes occur, and whether filter clogging occurs in a slurry circulation pump were observed, and if any one problem were issued, X was marked, and if no problem occurred, O was marked to evaluate the coating processibility.

**[Table 3]**

| Negative Electrode | Capacity retention rate (%) | Electrode coating quality |
|---|---|---|
| Example 1b | 82 | O |
| Example 2b | 85 | O |
| Example 3b | 86 | O |
| Example 4b | 85 | O |
| Comparative Example 1b | 62 | O |
| Comparative Example 2b | 68 | O |
| Comparative Example 3b | 75 | X |
| Comparative Example 4b | 72 | O |
| Comparative Example 5b | 70 | O |
| Comparative Example 6b | 71 | O |
| Comparative Example 7b | 77 | O |
| Comparative Example 8b | 72 | X |
| Comparative Example 9b | 65 | O |

Referring to Table 3 above, it can be seen that, when the negative electrodes according to Examples 1b to 4b were applied, no problem occurred in the coating process, and the capacity retention rates were also excellent. However, it can be seen that, when the negative electrodes according to Comparative Examples 1b and 2b were applied, the capacity retention rates were about 20 % lower than those of the examples, which may be a performance difference that may not be distinguished through the particle size distribution of the conductive material dispersion liquid.

In particular, from the results of Comparative Examples 1b and 2b, it can be seen that, even though the particle size on the dispersion liquid was considered as the appropriate size, the substantial length of SWCNT cluster was too small, so that a conductive path was not normally formed, which indicating that, with the characteristics of the conductive material dispersion liquid according to the present invention, the improvement in performance may be achieved.

In addition, it can be seen that, when the negative electrode according to Comparative Example 3b was applied, the SWCNT cluster with a large length existed in excessive amounts, and the number average length was large, causing problems in the coating process.

Also, it can be seen that, when the negative electrode according to Comparative Example 4b was applied, the particle size characteristics on the dispersion liquid were not much different from those of the examples in that the length characteristics were satisfactory, but the SWCNT clusters had a large number average diameter compared to the length, which may not cause problems in dispersion, but since the diameter is relatively larger than the length, a conductive network was not well created on the whole in the electrode, resulting in the low capacity retention rate. It can be seen that, since the SWCNT cluster having a thick diameter existed in relatively excessive amounts, Comparative Examples 5b and 6b showed similar results with that of Comparative Example 4b above.

Furthermore, when the negative electrode according to Comparative Example 7b was applied, the number of SWCNT clusters having a large length was small, but due to a difference in the number average length, a high possibility of problems occurring in the dispersion is expected, compared to the case where the negative electrode according to Example 4b was applied, and it can be seen that the capacity retention rate was also about 10% lower.

In Comparative Example 8b, it can be seen that, since the SWCNT cluster having a large length existed in excessive amounts, similar with the case where the negative electrode according to Comparative Example 3b was applied, the problem in dispersion occurred, causing the problem in coating processibility. When the negative electrode according to Comparative Example 9b was applied, considering the capacity retention rate was very poor, it can be expected that the length was small, and the diameter was also small, so that a conductive network was not normally created.

## Claims

1. A conductive material dispersion liquid, comprising
a single-walled carbon nanotube (SWCNT) cluster,
wherein the SWCNT cluster has a number average length of 0.8 µm to 8.0 µm,
the SWCNT cluster having a length greater than 10 µm accounts for 15% or less of a total number of the SWCNT cluster,
the SWCNT cluster has a number average diameter of 5 nm to 25 nm,
the SWCNT cluster having a diameter greater than 30 nm accounts for 15% or less of the total number of the SWCNT cluster, and
the length and the diameter of the SWCNT cluster are measured using an atomic force microscopy.

2. The conductive material dispersion liquid of claim 1, wherein the SWCNT cluster has a number average length of 1.0 µm to 6.0 µm.

3. The conductive material dispersion liquid of claim 1, wherein the SWCNT cluster having a length greater than 10 µm accounts for 10% or less of the total number of the SWCNT cluster.

4. The conductive material dispersion liquid of claim 1, wherein the SWCNT cluster has a number average diameter of 7 nm to 20 nm.

5. The conductive material dispersion liquid of claim 1, wherein the SWCNT cluster having a diameter greater than 30 nm accounts for 10% or less of the total number of the SWCNT cluster.

6. The conductive material dispersion liquid of claim 1, wherein the conductive material dispersion liquid further comprises a dispersant, and
the dispersant includes one or more selected from the group consisting of polyacrylate, polyvinylidenefluoride, polyvinylpyrrolidone, polyvinylalcohol, polyacrylamide, polyethyleneoxide, carboxymethyl cellulose, and diisopropylamine.

7. The conductive material dispersion liquid of claim 6, wherein, on the basis of 100 parts by weight of the conductive material dispersion liquid,
the SWCNT cluster is included in an amount of 0.2 parts by weight to 3.5 parts by weight, and
the dispersant is included in an amount of 0.2 parts by weight to 7.0 parts by weight.

8. An electrode comprising an electrode active material layer which includes an electrode active material, a single-walled carbon nanotube (SWCNT) cluster, and a binder, the electrode active material layer being disposed on a current collector,
wherein the SWCNT cluster has a number average length of 0.8 µm to 8.0 µm,
the SWCNT cluster having a length greater than 10 µm accounts for 15% or less of a total number of the SWCNT cluster,
the SWCNT cluster has a number average diameter of 5 nm to 30 nm,
the SWCNT cluster having a diameter greater than 30 nm accounts for 15% or less of the total number of the SWCNT cluster, and
the length and the diameter of the SWCNT cluster are measured using an atomic force microscopy.

9. The electrode of claim 8, wherein the electrode active material is a positive electrode active material, and
the positive electrode active material comprises one or more selected from the group consisting of lithium nickel-ternary oxide, lithium-rich manganese-based oxide, lithium iron-based phosphate, lithium nickel oxide, lithium cobalt oxide, and lithium manganese oxide.

10. The electrode of claim 8, wherein the electrode active material is a negative electrode active material, and
the negative electrode active material comprises one or more selected from the group consisting of a carbon-based particle, a silicon-based particle, and a carbon-silicon-based composite particle.

11. The electrode of claim 8, wherein the electrode further comprises a dotted conductive material, and
the dotted conductive material includes carbon black.

12. A lithium secondary battery, having a structure in which a positive electrode, a separator, and a negative electrode are stacked in sequence,
wherein at least one among the positive electrode and the negative electrode is the electrode according to claim 8.
